# EUROPEAN PATENT SPECIFICATION

(11) **EP 4 053 531 B1**
(45) Date of publication and mention of the grant of the patent: **09.07.2025**
(21) Application number: 21864544.8
(22) Date of filing: 04.08.2021
(51) Int. Cl.: G01L 17/00, G01L 9/00, H01M 10/48

(54) **APPARATUS FOR BATTERY CELL PRESSURE MEASUREMENT**
VORRICHTUNG ZUR BATTERIEZELLENDRUCKMESSUNG
APPAREIL DE MESURE DE PRESSION DE CELLULE DE BATTERIE

(30) Priority: 02.09.2020 KR 20200111588
(43) Date of publication of application: 07.09.2022
(73) Proprietor: LG Energy Solution, Ltd., Seoul 07335 (KR)
(72) Inventor: LEE, Ki Young, Daejeon 34122 (KR); KO, Dong Wan, Daejeon 34122 (KR); KIM, Doyul, Daejeon 34122 (KR)
(74) Representative: Plasseraud IP
(86) International application number: PCT/KR2021/010190
(87) International publication number: WO 2022/050583

(56) References cited:
- WO-A1-2020/145549
- CN-A- 109 755 624
- KR-A- 20170 042 082
- KR-A- 20170 112 495
- KR-A- 20170 112 495
- KR-A- 20190 051 663
- KR-A- 20190 090 992
- KR-B1- 100 970 038

## Description

### [TECHNICAL FIELD]

The present disclosure relates to apparatus for measuring a pressure of battery cells, and more particularly to an apparatus for measuring a pressure of battery cells that can measure the pressure of battery cells when a swelling phenomenon of the battery cells occurs.

### [BACKGROUND]

A secondary battery has attracted much attention as an energy source in various products such as a mobile device and an electric vehicle. The secondary battery is a potent energy resource that can replace the use of existing products using fossil fuels, and is in the spotlight as an environment-friendly energy source because it does not generate by-products due to energy use.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Meanwhile, when a plurality of battery cells are connected in series/parallel to configure a battery pack, a method of configuring a battery module composed of at least one battery cell and then adding other components to at least one battery module to configure a battery pack is common. Such a battery pack can be mainly used as an energy source for an electric vehicle.

When designing such a battery module, it has been developed by pressing the battery cells at a constant pressure and thus, the battery cells are swelled in the process of repeating charging and discharging. However, as the battery cells are swelling, there is a concern that swelling may occur to such an extent as to push out the surrounding module frame and battery pack case.

Therefore, if the pressure of battery cells can be measured, action can be taken through the pressure measured before the appearance of the battery module or the battery pack is deformed, thereby securing the safety of the battery module and the battery pack. At this time, the swelling pressure of the battery cells can be measured by using a pressure sensor, but in the case of FSR (Force-Sensing Resistor) sensor, which has previously been often used as a pressure sensor, there is a problem it is small in size and thus dose not measure all the swelling pressures generated on the entire surface of the battery cells.

Further, when the size of the FSR sensor is made larger in compliance with the surface size of the battery cells, a spacer that supports an upper plate and a lower plate between the upper plate and the lower plate no longer supports the upper plate and the lower plate, which causes a problem that the swelling pressure of the battery cells are not accurately measured.

Examples of background art can be found in KR20170112495A and CN109755624A.

### [DETAILED DESCRIPTION OF THE INVENTION]

### [Technical Problem]

It is an object of the present disclosure to provide an apparatus for measuring a pressure of battery cells, which can accurately measure a swelling pressure of battery cells.

The objects of the present disclosure are not limited to the aforementioned objects, and other objects which are not described herein should be clearly understood by those skilled in the art from the following detailed description.

### [Technical Solution]

In order to achieve the above objects, an apparatus for measuring a pressure of battery cells according to the independent claim 1 is provided.

The apparatus may include a third plate formed so as to be in contact with the battery cell in an opposite direction of the pressure sensor based on the battery cell.

The first, second, and third plates may be coupled to each other via a fixing member.

The first, second, and third plates may be formed wider than the pressure sensor and the battery cell, and the fixing member may be coupled to the first, second, and third plates on the outside of the pressure sensor and the battery cell.

The first, second, and third plates may be formed in a size that covers the pressure sensor and the battery cell.

At least one of the first, second, and third plates may be formed in a thickness of 0.5 mm.

The first, second, and third plates may include aluminum.

The pressure sensor may include a plurality of pressure measuring units, a connection unit that connects the plurality of pressure measuring units to each other, and an output unit that is connected to the connection unit, and sums up the pressure values measured via the pressure measuring unit and outputs the result.

The output unit may separately output the pressure value measured for each column or each row of the pressure measuring unit.

### [ADVANTAGEOUS EFFECTS]

The apparatus for measuring a pressure of battery cells according to an embodiment of the present invention can accurately measure the swelling pressure while minimizing the imbalance of the electrolytic solution through the first plate arranged so as to be in contact with the battery cell and the pressure sensor.

The effects of the present disclosure are not limited to the effects mentioned above and additional other effects not described above will be clearly understood from the description of the appended claims by those skilled in the art.

### [BRIEF DESCRIPTION OF THE DRAWINGS]

FIG. 1 is an exploded perspective view illustrating a battery module including battery cells;
FIG. 2 is a view illustrating a battery cell of FIG. 1;
FIG. 3 is a view illustrating a state in which a pressure sensor according to an embodiment of the present invention is formed on the surface of the cell body of FIG. 2;
FIG. 4 is a view illustrating a state in which a sensor mark is formed on the surface of a cell during pressure measurement according to FIG. 3;
FIG. 5 is a view illustrating the state of the apparatus for measuring a pressure of battery cells according to one embodiment of the present invention; and
FIG. 6 is a view illustrating a plurality of holes formed in the second plate according to one embodiment of the present invention.

### [DETAILED DESCRIPTION OF THE EMBODIMENTS]

The invention is defined in the appended claims. It should be appreciated that the exemplary embodiments, which will be described below, are illustratively described to help understand the present disclosure, and the present invention may be variously modified to be carried out differently from the exemplary embodiments described herein. However, in the description of the present disclosure, the specific descriptions and illustrations of publicly known functions or constituent elements will be omitted when it is determined that the specific descriptions and illustrations may unnecessarily obscure the subject matter of the present disclosure. In addition, in order to help understand the present disclosure, the accompanying drawings are not illustrated based on actual scales, but parts of the constituent elements may be exaggerated in size.

As used herein, terms such as first, second, and the like may be used to describe various components, and the components are not limited by the terms. The terms are used only to discriminate one component from another component.

Further, the terms used herein are used only to describe specific exemplary embodiments, and are not intended to limit the scope of the present invention. A singular expression includes a plural expression unless they have definitely opposite meanings in the context. It should be understood that the terms "comprise", "include", and "have" as used herein are intended to designate the presence of stated features, numbers, steps, constitutional elements, or combinations thereof, but it should be understood that they do not preclude a possibility of existence or addition of one or more other features, numbers, steps, constitutional elements, or combinations thereof.

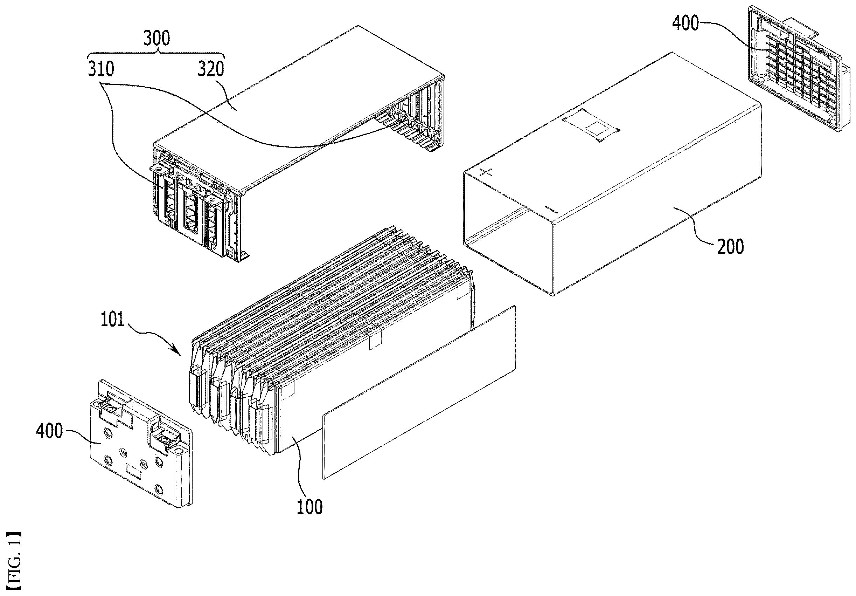

Now, a battery cell and a pressure sensor attached to the battery cell according to an embodiment of the present invention will be described with reference to FIGS. 1 to 3.

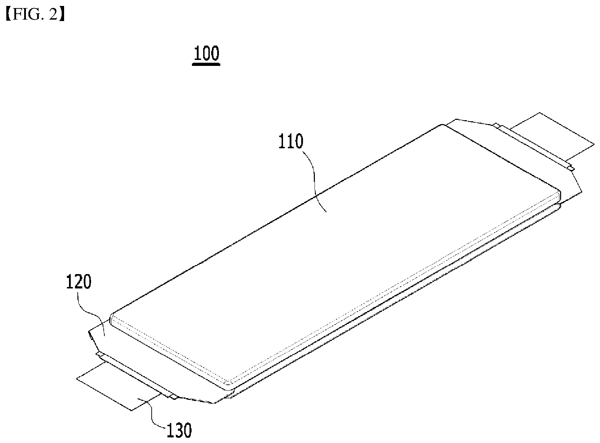

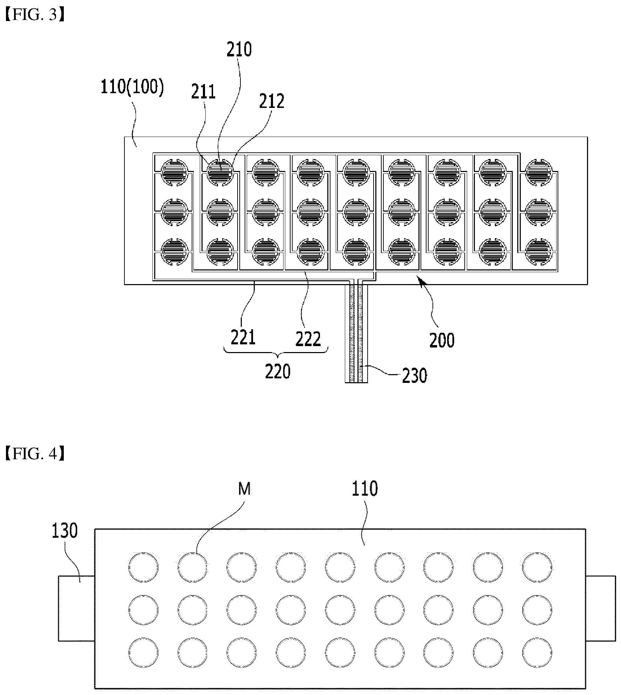

FIG. 1 is an exploded perspective view illustrating a battery module including battery cells. FIG. 2 is a view illustrating a battery cell of FIG. 1. FIG. 3 is a view illustrating a state in which a pressure sensor according to an embodiment of the present invention is formed on the surface of the cell body of FIG. 2.

Referring to FIGS. 1 to 3, the apparatus for measuring a pressure of battery cells according to an embodiment of the present invention includes a pressure sensor 200 configured to measure the pressure of battery cells 100 stacked inside a battery module 1000. The pressure sensor 200 includes a plurality of pressure measuring units 210, a connection unit 220 configured to connect the plurality of pressure measuring units 210 to each other, and an output unit 230 connected to the connection unit 220 and configured to output the pressure values measured via the pressure measuring units 210. The plurality of pressure measuring units 210 are arranged on the surfaces of the battery cells 100 to measure the pressures of the battery cells 100.

The battery cell 100 is a secondary battery, and may be configured of a pouch type secondary battery. The battery cells 100 may be formed of a plurality of battery cells and the plurality of the battery cells may be stacked together so as to be electrically connected to each other, thereby forming the battery cell stack 101.

A module frame 500 can house the battery cell stack 101 and a busbar frame assembly 300 to protect electronic components constituting the battery module from the outside.

The busbar frame assembly 300 may include busbar frames 310 configured to cover front and rear surfaces of the battery cell stack 101, and an upper plate 320 configured to connect two busbar frames 310 on an upper surface of the battery cell stack 101. The busbar frame 310 can electrically connect an electrode lead formed in the battery cell 100 and the busbar through a busbar mounted on the busbar frame 310. A connection unit (not illustrated) may be formed at a lower side of the upper plate 320 to electrically connect the busbar frames 310 formed at both ends of the battery cell stack 101. The busbar frame assembly 300 may be coupled to the front and rear surfaces and the upper surface of the battery cell stack 101.

End plates 400 may be disposed so as to cover the front and rear surfaces of the battery cell stack 101. The end plates 400 may be coupled by welding to edge portions of the module frame 500.

The battery cells 100 disposed inside the battery module 1000 occurs a swelling phenomenon, in which the volumes of the battery cells 100 expand while repeating charging and discharging, and due to the swelling of the battery cells, deformation may be occurred in the battery module and a battery pack on which the battery module is mounted. Therefore, before the battery module and the battery pack are deformed, it is possible to measure a swelling pressure and take a pretreatment based on the measured pressure value.

According to the present embodiment, the plurality of pressure measuring units 210 are arranged in rectangular grids on the surface of the battery cells 100, and the pressure measuring units 210 are connected to each other by the connection unit 220 to cover all ranges of the surfaces of the battery cells. Further, because the connection unit 220 is connected to one output unit 230, whereby the pressure values measured through the plurality of the pressure measuring units 210 can be outputted by summing up into one output value through the output unit 230 formed of one, so that the swelling pressure can be grasped more easily.

Further, the output unit 230 can separately output the values measured for each column or each row of the pressure measuring unit 210. Thereby, the pressure values formed so as to be different for each position on the surface of the battery cell 100 can be measured separately.

Referring to FIG. 2, the battery cell 100 may include a cell body 110, a cell terrace 120, and an electrode lead 130, and the plurality of pressure measuring units 210 may be arranged on the body surface of the cell body 110.

Each of the plurality of pressure measuring units 210 may include a current input unit 211 and a current output unit 212, and the connection unit 220 may include a current input side connection unit 221 for connecting the current input units 211, and a current output side connection unit 222 for connecting the current output units 212. Here, the output unit 230 may be connected to the current input side connection unit 221 and the current output side connection unit 222 to output the pressure value measured from the plurality of pressure measuring units.

The plurality of pressure measuring units 210 may be formed in a circular shape having a pattern. In more detail, referring to FIG. 3, the current input side connection unit 221 and the current output side connection unit 222 may form an outskirt of the pressure measuring unit 210 of a circular shape and sensing units extending from the current input side connection unit 221 and the current output side connection unit 222 may form a pattern of the interior of a circular shape.

Below, an apparatus for measuring a pressure of battery cells according to an embodiment of the present invention will be described with reference to FIGS. 4 to 6.

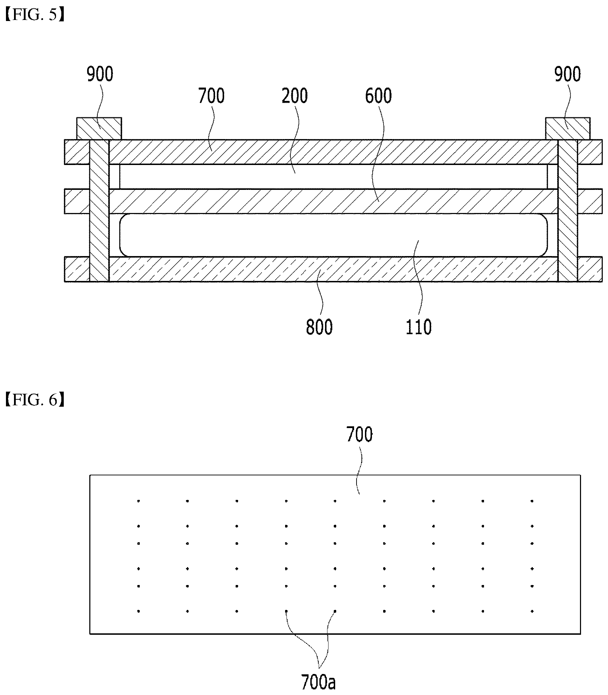

FIG. 4 is a view illustrating a state in which a sensor mark is formed on the surface of a cell during pressure measurement according to FIG. 3. FIG. 5 is a view illustrating the state of the apparatus for measuring a pressure of battery cells according to one embodiment of the present invention. FIG. 6 is a view illustrating a plurality of holes formed in the second plate according to one embodiment of the present invention.

Referring to FIGS. 4 to 6, the apparatus for measuring a pressure of battery cells according to the present invention includes a battery cell 100, a pressure sensor 200 configured to measure the surface pressure of the battery cell 100, and a first plate arranged between the battery cell 100 and the pressure sensor 200 so as to be in contact with the battery cell 100 and the pressure sensor 200.

When the surface pressure of the battery cell 100 is measured only with the pressure sensor 200, a sensor mark M due to the shape of the pressure measuring unit 210 may be formed on the surface of the cell body 110 as shown in FIG. 4. The pressure measuring unit 210 has a structure in which the pressure is measured while the upper end part is pressed downward and the resistance value changes due to a change of a minute current, and the pressure can be measured by allowing the pressure measuring unit 210 to press the surface of the cell body 110, whereby a sensor mark M can be generated on the pressed surface of the cell body 110. Due to the sensor mark M generated at this time, the electrolytic solution inside the battery cell 100 may spread in an unbalanced manner, which results in deterioration of the performance of the battery cell 100.

In this regard, according to the present embodiment, the first plate 600 is arranged between the battery cell 100 and the pressure sensor 200 to prevent a sensor mark M from being occurred on the surface of the cell body 110 of the battery cell 100, thereby minimizing the imbalance of the electrolytic solution inside the battery cell 100 due to the pressure sensor 200. In addition, the accuracy of sensing can be improved by allowing the surface unit pressure measurement of the cell body 110 to be performed by the first plate 600.

According to the claimed invention, the apparatus further includes a second plate 700 formed so as to be in contact with the pressure sensor 200 in an opposite direction of the battery cell 100 based on the pressure sensor 200. As the second plate 700 is covered on the upper surface of the pressure sensor 200, the first and second plates 600 and 700 are arranged on the upper and lower sides of the pressure sensor 200. Thereby, even if one side of the pressure sensor 200 is more pressed than the other side, the first and second plates 600 and 700 evenly fix the entire surface of the pressure sensor 200 back and forth, so that the surface pressure of the cell body 110 can be uniformly measured via the pressure sensor 200.

Referring to FIG. 6, the second plate 700 includes a plurality of holes 700a formed at positions corresponding to each of the plurality of pressure measuring units 210. Air may fill inside the pressure measuring units 210 formed in a circular pattern, and the first and second plates 600 and 700 are arranged on the upper and lower sides of the pressure sensor 200, and are stacked between the first and second plates 600 and 700 in a state where cold air cannot escape inside the pressure measuring unit 210, and accurate pressure measurement may not be achieved. Thus, according to the present embodiment, a plurality of holes 700a are formed at positions corresponding to each of the plurality of pressure measuring units 210, and the air generated inside the pressure measuring unit 210 can be discharged to the outside to measure the surface pressure of the battery cell 100 more accurately.

According to the present embodiment, the apparatus may further include a third plate 800 formed so as to be in contact with the battery cell 100 in an opposite direction of the pressure sensor 200 based on the battery cell 100. The third plate 800 is arranged on the opposite side of the pressure sensor 200 mounted on one surface of the battery cell 100, and fixes the battery cell 100 during pressure measurement through the pressure sensor 200 to perform more accurate pressure measurement.

Referring to FIG. 5, in order for the pressure sensor 200 to accurately measure the pressure of the battery cell 100, the first, second, and third plates 600, 700 and 800 can be coupled to each other via the fixing member 900. The first, second, and third plates 600, 700 and 800 may be formed in a size that covers the pressure sensor 200 and the battery cell 100. At this time, the first, second, and third plates 600, 700 and 800 may be formed wider than the pressure sensor 200 and the battery cell 100. In this case, the fixing member 900 can be coupled to the first, second, and third plates 600, 700 and 800 on the outside of the pressure sensor 200 and the battery cell 100.

According to the present embodiment, at least one of the first, second, and third plates 600, 700 and 800 may be formed in a thickness of 0.5 mm. Further, the first, second, and third plates 600, 700 and 800 may include aluminum. The plates are made of a material that makes pressure transmission excellent while being lightweight, which can improve the accuracy of pressure measurement of the battery cell.

The method for measuring the pressure of battery cells according to the present embodiment includes a step of applying a pressure to a pressure sensor 200 while a battery cell 100 is swelled, a step of transferring sensing information of the pressure sensor 200 to a BMS (battery management system), and a step of transferring the sensing information from a MCU (micro controller unit) inside the BMS to a user or an ECU (electric control unit). In more detail, in a battery cell for a vehicle, sensing information from the MCU may be transferred to the ECU of the vehicle, and in a battery cell for an ESS (energy storage system), sensing information from the MCU may be transferred to a user.

Swelling information measured from the pressure sensor 200 is transferred to a user so that the user can take a pretreatment on a product before the battery module and the battery pack are deformed.

According to the present embodiment, in the step of transferring sensing information to a BMS, a warning signal may be transmitted when a resistance value of the pressure sensor 200 is 100,000 Ohm or less. Further, a danger signal may be transmitted when a resistance value of the pressure sensor 200 is 10,000 Ohm or less. This means that the pressure acts on the pressure sensor 200 more strongly as the resistance value decreases. Further, as the resistance value of the pressure sensor 200 decreases, the type of the signal depending on the swelling becomes different, so that a user can immediately recognize the danger level depending on the level of swelling according to the type of the signal in advance.

In order to more exactly perform signal transmission of the pressure sensor, the method for measuring the pressure of the battery cell may further include a step of setting a resistance value of the pressure sensor to be infinite before the step of applying the pressure to the pressure sensor 200 while the battery cell 100 is swelled. When the resistance value is infinity, it means that no pressure is applied, and as the resistance value decreases, it means that the pressure is increasingly acting on the pressure sensor 200.

**[Description of Reference Numerals]**

| | | | |
|---|---|---|---|
| 100: | battery cell | 101: | battery cell stack |
| 110: | cell body | 120: | cell terrace |
| 130: | electrode lead | 200: | pressure sensor |
| 210: | pressure measuring unit | 211: | current input unit |
| 212: | current output unit | 220: | connection unit |
| 221: | current input side connection unit | | |
| 222: | current output side connection unit | | |
| 230: | output unit | 300: | bus bar frame assembly |
| 310: | busbar frame | 320: | upper plate |
| 400: | end plate | 500: | module frame |
| 600: | first plate | 700: | second plate |
| 700a: | plurality of holes | 800: | third plate |
| 900: | fixing member | M: | sensor mark |

## Claims

1. An apparatus for measuring a pressure of battery cells (100), the apparatus comprising:
a battery cell (100);
a pressure sensor (200) configured to measure the surface pressure of the battery cell (100);
a first plate (600) arranged between the battery cell (100) and the pressure sensor (200) so as to be in contact with the battery cell (100) and the pressure sensor (200), and
a second plate (700) formed so as to be in contact with the pressure sensor (200) in an opposite direction of the battery cell (100) based on the pressure sensor (200),
wherein the pressure sensor (200) comprises a plurality of pressure measuring units (210),
**characterized in that** the second plate (700) comprises a plurality of holes (700a) formed at positions corresponding to each of the plurality of pressure measuring units (210) configured to allow air generated inside the pressure measuring units (210) to be discharged.

2. The apparatus of claim 1,
which further comprises a third plate (800) formed so as to be in contact with the battery cell (100) in an opposite direction of the pressure sensor (200) based on the battery cell (100).

3. The apparatus of claim 2, wherein:
the first, second, and third plates (600, 700, 800) are coupled to each other via a fixing member (900).

4. The apparatus of claim 3, wherein:
the first, second, and third plates (600, 700, 800) are formed wider than the pressure sensor (200) and the battery cell (100), and
the fixing member (900) is coupled to the first, second, and third plates (600, 700, 800) on the outside of the pressure sensor (200) and the battery cell (100).

5. The apparatus of claim 2, wherein:
the first, second, and third plates (600, 700, 800) are formed in a size that covers the pressure sensor (200) and the battery cell (100).

6. The apparatus of claim 2, wherein:
at least one of the first, second, and third plates (600, 700, 800) is formed in a thickness of 0.5 mm.

7. The apparatus of claim 2, wherein:
the first, second, and third plates (600, 700, 800) comprises aluminum.

8. The apparatus of claim 1, wherein:
the pressure sensor (200) comprises
a plurality of pressure measuring units (210), a connection unit (220) that connects the plurality of pressure measuring units (210) to each other, and an output unit (230) that is connected to the connection unit (220), and sums up the pressure values measured via the pressure measuring unit (210) and outputs the result.

9. The apparatus of claim 8, wherein:
the output unit (230) separately outputs the pressure value measured for each column or each row of the pressure measuring unit (210).

## Patentansprüche

1. Vorrichtung zum Messen eines Drucks von Batteriezellen (100), wobei die Vorrichtung umfasst:
eine Batteriezelle (100);
einen Drucksensor (200), der dazu eingerichtet ist, den Oberflächendruck der Batteriezelle (100) zu messen;
eine erste Platte (600), die zwischen der Batteriezelle (100) und dem Drucksensor (200) so angeordnet ist, dass sie mit der Batteriezelle (100) und dem Drucksensor (200) in Kontakt steht, und
eine zweite Platte (700), die so ausgebildet ist, dass sie mit dem Drucksensor (200) in einer der Batteriezelle (100) entgegengesetzten Richtung, bezogen auf den Drucksensor (200), in Kontakt steht,
wobei der Drucksensor (200) eine Mehrzahl von Druckmesseinheiten (210) umfasst,
**dadurch gekennzeichnet, dass** die zweite Platte (700) eine Mehrzahl von Löchern (700a) umfasst, die an Positionen ausgebildet sind, die jeder der Mehrzahl von Druckmesseinheiten (210) entsprechen, die dazu eingerichtet sind, es Luft, die innerhalb der Druckmesseinheiten (210) erzeugt wird, zu erlauben, ausgestoßen zu werden.

2. Vorrichtung nach Anspruch 1,
welche ferner eine dritte Platte (800) umfasst, die so ausgebildet ist, dass sie mit der Batteriezelle (100) in einer dem Drucksensor (200) entgegengesetzten Richtung, bezogen auf die Batteriezelle (100), in Kontakt steht.

3. Vorrichtung nach Anspruch 2, wobei:
die erste, zweite und dritte Platte (600, 700, 800) über ein Befestigungselement (900) aneinander gekoppelt sind.

4. Vorrichtung nach Anspruch 3, wobei:
die erste, zweite und dritte Platte (600, 700, 800) breiter als der Drucksensor (200) und die Batteriezelle (100) ausgebildet sind, und
das Befestigungselement (900) an die erste, zweite und dritte Platte (600, 700, 800) an der Außenseite des Drucksensors (200) und der Batteriezelle (100) gekoppelt ist.

5. Vorrichtung nach Anspruch 2, wobei:
die erste, zweite und dritte Platte (600, 700, 800) in einer Größe ausgebildet sind, die den Drucksensor (200) und die Batteriezelle (100) abdeckt.

6. Vorrichtung nach Anspruch 2, wobei:
mindestens eine der ersten, zweiten und dritten Platte (600, 700, 800) mit einer Dicke von 0,5 mm ausgebildet ist.

7. Vorrichtung nach Anspruch 2, wobei:
die erste, zweite und dritte Platte (600, 700, 800) Aluminium umfasst.

8. Vorrichtung nach Anspruch 1, wobei
der Drucksensor (200) eine Mehrzahl von Druckmesseinheiten (210), eine Verbindungseinheit (220), die die Mehrzahl von Druckmesseinheiten (210) miteinander verbindet, und eine Ausgabeeinheit (230) umfasst, die mit der Verbindungseinheit (220) verbunden ist und die über die Druckmesseinheit (210) gemessenen Druckwerte summiert und das Ergebnis ausgibt.

9. Vorrichtung nach Anspruch 8, wobei:
die Ausgabeeinheit (230) den für jede Spalte oder jede Zeile der Druckmesseinheit (210) gemessenen Druckwert separat ausgibt.

## Revendications

1. Appareil de mesure d'une pression de cellules de batterie (100), l'appareil comprenant :
une cellule de batterie (100) ;
un capteur de pression (200) configuré pour mesurer la pression de surface de la cellule de batterie (100) ;
une première plaque (600) agencée entre la cellule de batterie (100) et le capteur de pression (200) de manière à être en contact avec la cellule de batterie (100) et le capteur de pression (200), et
une deuxième plaque (700) formée de manière à être en contact avec le capteur de pression (200) dans une direction opposée à la cellule de batterie (100) sur la base du capteur de pression (200),
dans lequel le capteur de pression (200) comprend une pluralité d'unités de mesure de pression (210),
**caractérisé en ce que** la deuxième plaque (700) comprend une pluralité de trous (700a) formés à des positions correspondant à chacune de la pluralité d'unités de mesure de pression (210) configurés pour permettre à de l'air généré à l'intérieur des unités de mesure de pression (210) d'être évacué.

2. Appareil selon la revendication 1,
qui comprend en outre une troisième plaque (800) formée de manière à être en contact avec la cellule de batterie (100) dans une direction opposée au capteur de pression (200) sur la base de la cellule de batterie (100).

3. Appareil selon la revendication 2, dans lequel :
les première, deuxième et troisième plaques (600, 700, 800) sont accouplées l'une à l'autre par l'intermédiaire d'un organe de fixation (900).

4. Appareil selon la revendication 3, dans lequel :
les première, deuxième et troisième plaques (600, 700, 800) sont formées plus larges que le capteur de pression (200) et la cellule de batterie (100), et
l'organe de fixation (900) est accouplé aux première, deuxième et troisième plaques (600, 700, 800) à l'extérieur du capteur de pression (200) et de la cellule de batterie (100).

5. Appareil selon la revendication 2, dans lequel :
les première, deuxième et troisième plaques (600, 700, 800) sont formées dans une taille qui recouvre le capteur de pression (200) et la cellule de batterie (100).

6. Appareil selon la revendication 2, dans lequel :
au moins l'une des première, deuxième et troisième plaques (600, 700, 800) est formée dans une épaisseur de 0,5 mm.

7. Appareil selon la revendication 2, dans lequel :
les première, deuxième et troisième plaques (600, 700, 800) comprennent de l'aluminium.

8. Appareil selon la revendication 1, dans lequel :
le capteur de pression (200) comprend
une pluralité d'unités de mesure de pression (210), une unité de connexion (220) qui connecte entre elles la pluralité d'unités de mesure de pression (210), et une unité de sortie (230) qui est connectée à l'unité de connexion (220), et additionne les valeurs de pression mesurées par l'intermédiaire de l'unité de mesure de pression (210) et émet en sortie le résultat.

9. Appareil selon la revendication 8, dans lequel :
l'unité de sortie (230) émet séparément en sortie la valeur de pression mesurée pour chaque colonne ou chaque rangée de l'unité de mesure de pression (210).
